# EUROPÄISCHE PATENTSCHRIFT

(11) **EP 0 607 888 B1**
(45) Veröffentlichungstag und Bekanntmachung des Hinweises auf die Patenterteilung: **27.08.1997**
(21) Anmeldenummer: 94100525.8
(22) Anmeldetag: 14.01.1994
(51) Int. Cl.: B62D 5/06

(54) **Hydraulische Lenkregelung bei einem Elektrofahrzeug**
Hydraulic steering control for an electric vehicle
Contrôle de direction hydraulique pour véhicule électrique

(30) Priorität: 21.01.1993 DE 4301581
(43) Veröffentlichungstag der Anmeldung: 27.07.1994
(73) Patentinhaber: STILL GMBH, D-22113 Hamburg (DE)
(72) Erfinder: Kröhling, Erich, Dipl.-Ing. (FH), D-21465 Reinbek (DE)
(74) Vertreter: Kasseckert, Rainer

(56) Entgegenhaltungen:
- EP-A- 0 044 733
- EP-A- 0 534 332
- WO-A-92/17355
- DE-A- 3 622 218
- PATENT ABSTRACTS OF JAPAN vol. 13, no. 10 (M-782)11. Januar 1989 & JP-A-63 219 479 (TOYOTA AUTOM LOOM WORKS LTD) 13. September 1988

## Beschreibung

Die Erfindung betrifft ein Verfahren zur Regelung der Drehzahl einer Pumpe in einem Kraftfahrzeug, insbesondere Hublader mit einem batterieelektrischen Fahrantrieb, mit einer Lenkeinrichtung mit hydraulischer Hilfskraftunterstützung und mit einer hydraulischen Arbeitseinrichtung, welche bei einem Gabelstapler ein Hubzylinder-Kolben-Aggregat für das Hubgerüst darstellt, wobei diese Pumpe von einem Elektromotor angetrieben wird, welcher seinerseits von einer Impulssteuerung angesteuert wird, und wobei in der Förderleitung dieser Pumpe ein Prioritätsventil angeordnet ist, das einen Vorzugsstrom für die hydraulische Lenkhilfskraftunterstützung liefert und einen Sekundärstrom für die hydraulische Arbeitseinrichtung.

Bei einem derartigen Fahrzeug wird gemäß DE-36 22 218-A1 die Impulssteuerung des die Pumpe antreibenden Elektromotors einerseits von einer Steuerung für die Arbeitseinrichtung willkürlich angesteuert und andererseits zusätzlich von einem von der Lenkeinrichtung ausgehenden Signal. Letzteres Signal ist abhängig von der Differenz eines hinter dem Lenkventil abgenommen Druckes und des Druckes des vom Prioritätsventil gelieferten Vorzugsstromes. Diese Druckdifferenz wird zusätzlich auf das Prioritätsventil gegeben, wodurch Vorzugs- und Sekundärstrom relativ zueinander geregelt werden können.

Bei dieser bekannten Einrichtung kann die Drehzahl des die Pumpe antreibenden Elektromotors (Pumpenaggregat) auf einen konstanten Wert hochgeregelt werden, wobei sich dieser Wert nach der gewünschten maximalen Lenkgeschwindigkeit richtet. Dabei kann in Übereinstimmung mit der Erfahrung von einer maximalen Lenkgeschwindigkeit von etwa 90 U/min ausgegangen werden.

Diese Regelungsart hat den Nachteil, daß dabei unnötig viel Energie zum Betreiben der Pumpe verbraucht wird. Es hat sich nämlich gezeigt, daß die zum Lenken benötigte Ölmenge weit weniger als 50 % der tatsächlich geförderten Ölmenge entspricht. Der nicht benötigte Rest wird somit über das Lenkventil zum Tank zurückgeleitet. Dieser Strom stellt energetisch gesehen eine reinen Verluststrom dar.

Demgemäß liegt der Erfindung die Aufgabe zugrunde, eine Regelungsmethode für eine Pumpe in einem Kraftfahrzeug der eingangs beschriebenen Art zu entwickeln, die sich energiesparend auswirkt und gleichzeitig ohne hohen technischen Aufwand realisiert werden kann.

Diese Aufgabe wird erfindungsgemäß dadurch gelöst, daß die Drehzahl der Pumpe auf einen Wert geregelt und konstant gehalten wird, der einem Wert unterhalb demjenigen der maximalen Lenkgeschwindigkeit entspricht, und daß bei Überschreiten des entsprechenden Wertes für die Lenkgeschwindigkeit die Drehzahl der Pumpe in einer oder mehreren Stufen erhöht wird.

Zusätzlich wird natürlich die Drehzahl der Pumpe über die Impulssteuerung des Elektromotors von einem Signal gesteuert, das die Steuerung für die hydraulische Arbeitseinrichtung abgibt.

Erfindungsgemäß wird die Drehzahl der Pumpe auf einen konstanten Wert hochgeregelt, der beispielsweise nur noch ein Drittel desjenigen Wertes beträgt, der zum Erreichen der erfahrungsgemäß vorliegenden maximalen Lenkgeschwindigkeit notwendig ist. Bei Vorliegen einer Arbeitslast für die Arbeitseinrichtung wird die Drehzahl durch die Impulssteuerung des Elektromotors entsprechend weiter erhöht und von dem Prioritätsventil zusätzlich zum Vorzugsstrom ein Sekundärstrom für die Arbeitseinrichtung freigegeben.

Die nunmehr erreichbare Lenkgeschwindigkeit ist nach oben durch den konstanten Drehzahlwert der Pumpe begrenzt. Wird am Lenkrad nun eine höhere Lenkgeschwindigkeit gemessen, für die aber der vorhandene Drehzahlwert nicht ausreicht, wird erfindungsgemäß die Drehzahl der Pumpe erhöht. Bei schnellen Lenkbewegungen wird somit der die Pumpe antreibende Elektromotor über die Impulssteuerung in einer oder mehreren Stufen auf höhere Drehzahlen geregelt.

Dazu wird ständig die Lenkgeschwindigkeit über einen Drehzahlgeber am Lenkrad gemessen. Bei Überschreiten einer bestimmten Lenkgeschwindigkeit wird über eine Signalleitung die Impulssteuerung des Elektromotors angesteuert und die Drehzahl der Pumpe erhöht. Sinkt die Lenkgeschwindigkeit wieder unterhalb des vorgegebenen Wertes, wird die Drehzahl des Elektromotors abgesenkt und auf den ursprünglichen Wert konstant gehalten. Dieser konstante Wert wird so gewählt, daß die wegen der Kavitationsgefahr kleinste zulässige Lastdrehzahl der Hydraulikpumpe eingehalten wird oder der Großteil der erfahrungsgemäß auftretenden Werte für die Lenkgeschwindigkeit ohne Nachregelung der Drehzahl erreichbar ist und nur für die seltener vorkommenden höheren Lenkgeschwindigkeiten die Drehzahl nachgeregelt werden muß. Durch diese Maßnahme wird der Energieverbrauch für das Lenken wesentlich reduziert. Vorteilhafterweise wird die Drehzahl der Pumpe zunächst auf einen Wert geregelt und konstant gehalten, der 40 - 60 % desjenigen Wertes beträgt, der zum Erreichen der maximalen Lenkgeschwindigkeit benötigt wird.

Die erfahrungsgemäß gemessene maximale Lenkgeschwindigkeit liegt dabei in der Gegend von 90 U/min. Es hat sich gezeigt, daß der Großteil der Lenkbewegungen Geschwindigkeiten besitzt, die niedriger als 60 % dieses Wertes liegen.

Der Zusammenhang zwischen der gemessenen Drehzahl am Lenkrad n_{L} und der Drehzahl des die Pumpe antreibenden Elektromotors (Pumpenaggregat) n_{P} ist linear. Erfindungsgemäß wird zunächst eine konstante Drehzahl n_{Pk} eingestellt, die etwa die Hälfte (40-60 %) derjenigen Drehzahl n_{P} beträgt, die zum Erreichen der erfahrungsgemäß festgelegten maximalen Lenkgeschwindigkeit notwendig ist. Damit können Werte bis zu 40-60 % der maximalen Lenkgeschwindigkeit abgedeckt werden. Sollte die gemessene Lenkgeschwindigkeit n_{L} jedoch diesen Wertebereich überschreiten, so erfolgt eine entsprechende Drehzahlerhöhung für n_{P}.

Ein sehr niedriger konstanter Anfangswert (nahe Null) ist nicht realisierbar, weil die verwendeten Zahnradpumpen wegen der Kavitationsgefahr mit einer Mindestdrehzahl arbeiten müssen. Bei verschieden ausgeführten Anlagen liegt diese Pumpendrehzahl bei 40-60% der für die maximale Lenkgeschwindigkeit erforderlichen Pumpendrehzahl, deckt sich also mit dem Wert, der für den Großteil der Lenkbewegung ausreichend ist.

Die Erhöhung der Pumpendrezahl bei höheren Lenkgeschwindigkeiten kann in einer oder mehreren Stufen erfolgen. Wenn der Lenkanteil mit höheren Lenkgeschwindigkeiten klein ist, ist der Energieverbrauch für das Lenken bei einer einstufigen Anhebung der Pumpendrehzahl praktisch genausogroß wie bei einer linearen Anhebung.

Im besonderen eignet sich als Ausführungsbeispiel des erfindungsgemäßen Regelungsverfahrens der Einsatz desselbigen in einem Kraftfahrzeug wie es in der DE-36 22 218-A1 vorgeschlagen ist. Erfindungsgemäß wird die Drehzahl des Pumpenaggregates dabei auf die Hälfte desjenigen Wertes hochgeregelt, der notwendig ist, um die maximale Lenkgeschwindigkeit zu erreichen. Die maximale Lenkgeschwindigkeit beträgt, wie Messungen ergeben, etwa 90 U/min. Erst bei Überschreitung des entsprechenden Wertes der Lenkgeschwindigkeit am Lenkrad wird die Drehzahl des Pumpenaggregates nachgeregelt. Dazu muß lediglich ein Schwellenwertschalter in die Regelstrecke eingebaut und mittels eines Drehzahlgebers am Lenkrad die Lenkgeschwindigkeit überwacht werden. In diesem Ausführungsbeispiel wird die Verteilung der Lenkdrehzahl gemessen mit dem Ergebnis, daß in 97 % der Lenkzeit die Lenkdrehzahl unterhalb 40 U/min liegt und nur in 3 % darüber. In weniger als 3 % der Lenkzeit wird demgemäß die Drehzahl des Pumpenaggregats nachgeregelt, wobei in diesem Fall eine einstufige Anhebung auf eine Pumpendrehzahl genügt, die für die maximale Lenkdrehzahl erforderlich ist.

Das erfindungsgemäße Verfahren ermöglicht einen erheblich energiesparenderen Betrieb der bekannten Kraftfahrzeuge nach wenigen technischen Modifikationen, welche das erfindungsgemäße Verfahren ermöglichen.

## Patentansprüche

1. Verfahren zur Regelung der Drehzahl einer Pumpe in einem Kraftfahrzeug, insbesondere Hublader mit einem batterieelektrischen Fahrantrieb, mit einer Lenkeinrichtung mit hydraulischer Hilfskraftunterstützung und mit einer hydraulischen Arbeitseinrichtung, welche bei einem Gabelstapler ein Hubzylinder-Kolben-Aggregat für das Hubgerüst darstellt, wobei diese Pumpe von einem Elektromotor angetrieben wird, welcher seinerseits von einer Impulssteuerung angesteuert wird, und wobei in der Förderleitung dieser Pumpe ein Prioritätsventil angeordnet ist, das einen Vorzugsstrom für die hydraulische Lenkhilfskraftunterstützung liefert und einen Sekundärstrom für die hydraulische Arbeitseinrichtung, **dadurch gekennzeichnet**, daß die Drehzahl der Pumpe auf einen Wert geregelt und konstant gehalten wird, der einem Wert unterhalb demjenigen der maximalen Lenkgeschwindigkeit entspricht, und daß bei Überschreiten des entsprechenden Wertes für die Lenkgeschwindigkeit die Drehzahl der Pumpe in einer oder mehreren Stufen erhöht wird.

2. Verfahren nach Anspruch 1, **dadurch gekennzeichnet**, daß die Drehzahl der Pumpe zunächst auf einen Wert geregelt und konstant gehalten wird, der 40 bis 60 % desjenigen Wertes beträgt, der zum Erreichen der maximalen Lenkgeschwindigkeit benötigt wird.

## Claims

1. Method of controlling the rotational speed of a pump in a motor vehicle, in particular a shovel loader with a battery-powered electric drive, having a steering device with hydraulic power assistance and having a hydraulic operating device which, in a fork-lift truck, constitutes a lifting cylinder-piston assembly for (he lifting structure, the said pump being driven by an electric motor which, in turn, is actuated by a pulse control, and a priority valve being arranged in the delivery line of this pump, which valve provides a priority flow for the hydraulic power-assisted steering system and a secondary flow for the hydraulic operating device, characterized in that the rotational speed of the pump is controlled and kept constant at a value which corresponds to a value below that of the maximum steering velocity, and in that, if the corresponding value for the steering velocity is exceeded, the rotational speed of the pump is increased in one or more stages.

2. Method according to Claim 1, characterized in that the rotational speed of the pump is firstly controlled and kept constant at a value which is 40 to 60 % of that value which is required to achieve the maximum steering velocity.

## Revendications

1. Procédé de régulation de la vitesse de rotation d'une pompe dans un véhicule à moteur, en particulier un chariot élévateur à commande électrique par batterie, avec un mécanisme de direction avec un apport de force auxiliaire hydraulique et avec un dispositif de travail hydraulique, qui représente un ensemble cylindre de levage/piston pour l'appareil de levage dans le cas d'un élévateur à fourche, dans lequel cette pompe est entraînée par un moteur électrique, qui à son tour est commandé par une commande à impulsions, et dans lequel une soupape prioritaire est disposée dans la conduite de refoulement de cette pompe, qui délivre un courant préférentiel pour l'apport de force auxiliaire pour la direction et un courant secondaire pour le dispositif de travail hydraulique, caractérisé en ce que la vitesse de rotation de la pompe est régulée et maintenue constante à une valeur qui correspond à une valeur située en dessous de celle de la vitesse maximale de la direction, et en ce que la vitesse de rotation de la pompe est augmentée, en une ou plusieurs étapes, lors du dépassement de la valeur correspondante pour la vitesse de la direction.

2. Procédé suivant la revendication 1, caractérisé en ce que la vitesse de rotation de la pompe est d'abord régulée et maintenue constante à une valeur, qui vaut de 40 à 60 % de la valeur qui est nécessaire pour atteindre la vitesse maximale de la direction.
